(19) Europäisches Patentamt
European Patent Office
Office européen des brevets

(11) **EP 3 054 587 B1**

(12) **EUROPEAN PATENT SPECIFICATION**

(45) Date of publication and mention
of the grant of the patent:
**08.04.2026 Bulletin 2026/15**

(21) Application number: **14848937.0**

(22) Date of filing: **11.06.2014**

(51) International Patent Classification (IPC):
*H02P 27/06* (2006.01)   *H02M 7/48* (2007.01)
*H02P 21/14* (2016.01)   *H02P 29/02* (2016.01)
*H02P 23/00* (2016.01)   *H02P 23/14* (2006.01)

(52) Cooperative Patent Classification (CPC):
**H02P 23/14; H02P 21/14; H02P 23/0031;**
**H02P 27/06; H02P 29/02;** H02P 2207/01

(86) International application number:
**PCT/JP2014/065401**

(87) International publication number:
**WO 2015/045497 (02.04.2015 Gazette 2015/13)**

(54) **ELECTRICAL POWER CONVERTER**

STROMWANDLER

CONVERTISSEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2013 JP 2013203002**

(43) Date of publication of application:
**10.08.2016 Bulletin 2016/32**

(73) Proprietor: **Hitachi Industrial Equipment Systems Co., Ltd.**
**Chiyoda-ku**
**Tokyo 101-0022 (JP)**

(72) Inventor: **ONUMA, Yusaku**
**Tokyo 101-0022 (JP)**

(74) Representative: **Mewburn Ellis LLP**
**Aurora Building**
**Counterslip**
**Bristol BS1 6BX (GB)**

(56) References cited:
EP-A2- 1 257 049    JP-A- 2008 011 622
JP-A- H04 161 086    JP-A- H04 281 392
JP-A- H10 174 491    US-A- 5 929 400

## Description

### TECHNICAL FIELD

The present invention relates to an electrical power converter.

### BACKGROUND ART

In an electrical power converter which performs drive control of an electric motor, not only electrical power converter specification values, such as a rated output current, are set, but also electric motor specification values, such as a rated voltage, and electric motor constants, such as resistance, are set in accordance with the electric motor driven by the electrical power converter. By using the set values, stable driving of the electric motor is realized.

In particular, when the electric motor is driven by vector control, these set values are very important set elements. When these set values are not appropriate, the stable driving of the electric motor may not be realized. Further, there is a possibility that an excessive current is generated, and thereby the electrical power converter and the electric motor are burned.

In Patent Literature 1 (JP-B-3128833), it is described that "the suitability, that is, whether or not a plurality of motor circuit constants set in an inverter are within realistic ranges, whether or not a motor having a capacity set according to the output capacity of the inverter can be actually driven, and the like, is determined, and an alert is issued in case of abnormality." (See the paragraph of "Operation").

US 5,929,400 A proposes a controller for a field-orientated elevator motor controller which calculates an integral gain, proportional gain, and overall gain for the controller. The electrical power converter comprises a set value determining section (auto-calibration logic unit) which determines if a data item is appropriate or not and if it is inappropriate the data item is changed.

EP 1 257 049 A2 proposes an AC motor controller apparatus which has a motor type identification means.

JP H04 281392 A discloses an operation control of motor drive inverter by setting voltage-frequency characteristic of inverter output in correspondence to operation mode.

### CITATION LIST

### PATENT LITERATURE

PATENT LITERATURE 1: JP-B-3128833

### SUMMARY OF INVENTION

### TECHNICAL PROBLEM

Patent Literature 1 describes the determination of suitability of the inverter capacity and the motor. However, with Patent Literature 1, it is not possible to determine the suitability of other values including electrical power converter specification values such as a rated output current, electric motor specification values, such as a rated voltage, and electric motor constants such as a resistance value.

Further, there is also a problem that, when the set value is abnormal, the stable drive of the motor cannot be realized.

Therefore, an object of the present invention is to provide an electrical power converter capable of realizing stable drive of an electric motor even when set values, such as electrical power converter set specification values, or electric motor specification values, or electric motor constants, are inappropriate.

### SOLUTION TO PROBLEM

Accordingly, the invention provides an electrical power converter as set out in claim 1.

### ADVANTAGEOUS EFFECTS OF INVENTION

With the present invention, it is possible to provide an electrical power converter which can realize stable drive of an electric motor even when set values of electrical power converter specification values, or electric motor specification values, or electric motor constants are inappropriate.

Further, issues other than those described above, configurations and effects will be apparent from the following description of embodiments.

BRIEF DESCRIPTION OF DRAWINGS

[FIG. 1] FIG. 1 shows an example of a configuration of embodiment 1.
[FIG. 2] FIG. 2 shows an example of an RL circuit.
[FIG. 3] FIG. 3 shows an example of a T-type equivalent circuit of an induction motor.
[FIG. 4] FIG. 4 shows an example of a configuration of embodiment 2.
[FIG. 5] FIG. 5 shows an example of an equivalent circuit of a permanent magnet synchronous motor.
[FIG. 6] FIG. 6 shows an example of a configuration of embodiment 3.
[FIG. 7] FIG. 7 shows an example of a configuration of embodiment 4.

DESCRIPTION OF EMBODIMENTS

In the following, embodiments according to the present invention will be described with reference to the accompanying drawings. It should be noted that, in the following descriptions, components which are common among figures and expressions are denoted by the same reference numerals and characters, and duplicate descriptions about them will be omitted.

EMBODIMENT 1

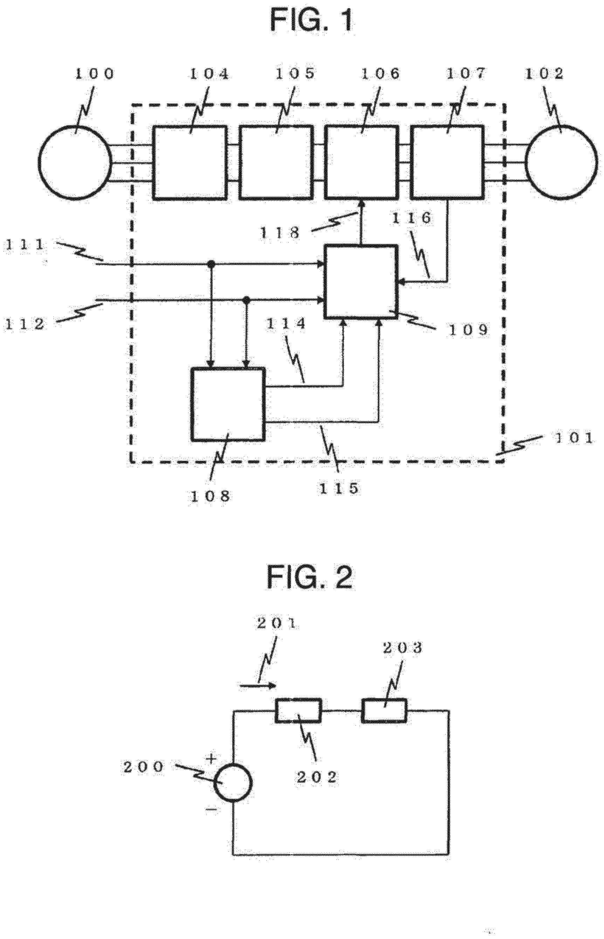

FIG. 1 shows an example of configuration of embodiment 1.

An electrical power converter 101, which performs drive control of a three-phase AC induction motor 102, includes a rectifying circuit 104, a smoothing circuit 105, a switching circuit 106, a current detector 107, a set value determining section 108, and an electric motor control section 109.

A three-phase AC voltage output from a three-phase AC power supply 100 is rectified by the rectifying circuit 104 and smoothed by the smoothing circuit 105, to generate a DC voltage. It should be noted that a single-phase AC power supply may be used instead of the three-phase AC power supply 100, and a single-phase AC voltage may be rectified and smoothed to generate a DC voltage.

On the basis of a voltage command 118, the switching circuit 106 converts the DC voltage to an arbitrary three-phase AC voltage and applies the three-phase AC voltage to the three-phase AC induction motor 102.

The current detector 107 detects a three-phase output current of the electrical power converter 101. It may be configured such that only two phases of the three-phase output current are detected, and such that the remaining one phase is calculated on the basis that the sum of three phases of AC is zero. Further, it may also be configured such that a shunt resistor is provided at the positive or negative side of the input of the switching circuit 106, and such that the three-phase output current is estimated from the current flowing through the shunt resistor.

On the basis of at least two of data items on electric motor specification set values 111 or of data items on electric motor constant set values 112, the set value determining section 108 determines whether or not a set value is appropriate. When determining that the set value is inappropriate, the set value determining section 108 changes the set value to a data set on the basis of at least one of the data items on the electric motor specification set values 111, or of the data items on the electric motor constant set values 112.

Here, the two data items are, for example, the following data items.

- A data item on rated output $W_m$ of the electric motor specification set values 111, and a data item on rated voltage $V_m$ of the electric motor specification set values 111.
- A data item on rated output $W_m$ of the electric motor specification set values 111, and a data on primary resistance $R_1$ of the electric motor constant set values 112.
- A data item on primary resistance $R_1$ of the electric motor constant set values 112, and a data item on secondary resistance $R_2$ of the electric motor constant set values 112.

Alternatively, whether the set values are appropriate can be determined by using constants converted by Expressions 1 to 8.

The electric motor control section 109 generates the voltage command 118 on the basis of at least one of the data items on the electric motor specification set values 111, or of the data items on the electric motor constant set values 112, or of data items on electric motor specification change values 114, or of data items on electric motor constant change values 115, and on the basis of a detection current 116. The calculation method of the voltage command 118 is, for example, a position (or velocity) sensorless vector control method. It should be noted that the coordinate system of the detection current 116 may be converted from a three-phase fixed coordinate system to a two-phase fixed coordinate system or a rotating coordinate system rotating at an arbitrary speed.

Examples of the electric motor specification set values 111 in the three-phase AC induction motor 102 include a data item on rated output $W_m$, a data item on rated voltage $V_m$, a data item on rated current $I_m$, a data item on rated frequency $F_m$, a data item on maximum frequency $F_{mmax}$, a data item on rated rotation speed $N_m$, a data item on maximum rotation speed $N_{mmax}$, a data item on rated torque $T_m$, a data item on the number of poles P, a data item on the number of pole pairs $P_p$, a data item on rated slide $F_s$, or the like. Further, examples of the electric motor constant set values 112 in the three-phase AC induction motor 102 include a data item on primary resistance $R_1$, a data item on secondary resistance $R_2$, a data item on primary leakage inductance $I_1$, a data item on secondary leakage inductance $I_2$, a data item on primary self-inductance $L_1$, a data item on secondary self-inductance $L_2$, a data item on mutual inductance M, a data item on no-load (magnetization) current $I_0$, or the like. The electric motor specification set values 111, and the electric motor constant set values 112 may be set from the outside of the electrical power converter 101, or may be set in advance in the inside of the electrical power converter 101. For example, electric motor constants represented by Expression 1 to Expression 8 may be obtained by conversion using the electric motor specification set values 111, and the electric motor constant set values 112. Alternatively, electric motor constants represented by Expression 1 to Expression 8 may be directly set.

[MATH. 1]

$$1 = I_1 + I_2$$

[MATH. 2]

$$L_1 = \frac{\sqrt{\left(\dfrac{V_m}{\sqrt{3}I_0}\right)^2 - R_1{}^2}}{2\pi F_m}$$

[MATH. 3]

$$M = L_1 - I_1$$

[MATH. 4]

$$M = L_2 - I_2$$

[MATH. 5]

$$R_s = R_1 + \left(\frac{M}{L_2}\right)^2 R_2$$

[MATH. 6]

$$L_s = L_1 - \frac{M^2}{L_2}$$

[MATH. 7]

$$I_m{}^2 = I_0{}^2 + I_t{}^2$$

[MATH. 8]

$$2\pi F_s = \frac{R_2}{L_2}\frac{I_t}{I_0}$$

A method for determining whether or not the electric motor specification set value 111 and the electric motor constant set value 112 are appropriate will be described.

First, a circuit shown in FIG. 2 is considered. FIG. 2 shows an example of an RL circuit.

In FIG. 2, when an angular velocity $\omega$ is used, a voltage v200 and a current i201 have a relationship shown by Expression 9.

[MATH. 9]

$$v = \sqrt{R^2 + (\omega L)^2}\, i$$

Therefore, when the voltage v200, the current i201, the angular velocity $\omega$, a resistance R202, and an inductance L203 are assumed to be positive, relationships shown by Expression 10 and Expression 11 are established.

[MATH. 10]

$$v > R\, i$$

[MATH. 11]

$$v > \omega L\, i$$

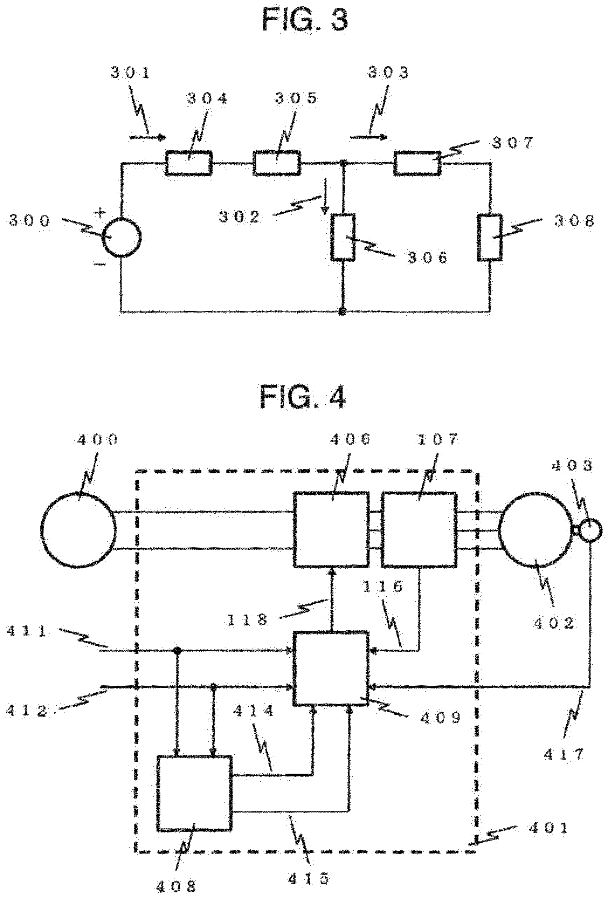

Next, FIG. 3 is considered. FIG. 3 shows an example of a T-type equivalent circuit of an induction motor, and represents one phase of the induction motor in a steady state. A load $R_L$ 308 can be represented by Expression 12 using a primary angular velocity $\omega_1$, a slip angular velocity $\omega_s$, and a secondary resistance $R_2$.

[MATH. 12]

$$R_L = \frac{\omega_1 R_2}{\omega_s}$$

Here, when the electric motor specification set values 111 and the electric motor constant set values 112 are used and expressed by following the relationships shown by Expression 10 and Expression 11, Expression 13 to Expression 23 can be obtained.

[MATH. 13]

$$K_a v_1 \geq R_1 i_1 \geq K_b v_1$$

[MATH. 14]

$$K_a v_1 \geq \frac{\omega_1 R_2}{\omega_s} i_2 \geq K_b v_1$$

[MATH. 15]

$$K_a v_1 \geqq \omega_1 l_1 i_1 \geqq K_b v_1$$

[MATH. 16]

$$K_a v_1 \geqq \omega_1 l_2 i_2 \geqq K_b v_1$$

[MATH. 17]

$$K_a v_1 \geqq \omega_1 M \, i_0 \geqq K_b v_1$$

[MATH. 18]

$$K_a i_1 \geqq i_0 \geqq K_b i_1$$

[MATH. 19]

$$K_a v_1 \geqq \omega_1 l \, i_1 \geqq K_b v_1$$

[MATH. 20]

$$K_a v_1 \geqq \omega_1 L_1 i_1 \geqq K_b v_1$$

[MATH. 21]

$$K_a v_1 \geqq \omega_1 L_2 i_2 \geqq K_b v_1$$

[MATH. 22]

$$K_a v_1 \geqq R_s i_1 \geqq K_b v_1$$

[MATH. 23]

$$K_a v_1 \geqq \omega_1 L_s i_1 \geqq K_b v_1$$

Here, there is the following relationship.

[MATH. 24]

$$0 \leqq K_b \leqq K_a \leqq 1$$

Therefore, each of the expressions may be individually set. Also, the following expressions are similarly set. Expression 13 to Expression 23 may be modified by using relationships of Expression 25 and Expression 26.

[MATH. 25]

$$i_1{}^2 = i_0{}^2 + i_2{}^2$$

[MATH. 26]

$$\omega_1 = \omega_2 + \omega_s$$

Here, $\omega_2$ represents a secondary angular velocity. Further, the following relationship can be obtained from Expression 25.

[MATH. 27]

$$K_a i_1 \geqq i_0 \geqq K_b i_1$$

When, in Expression 13 to Expression 23, and Expression 27, for example, when $v_1$ is replaced by the rated voltage $V_m$, $i_1$ is replaced by the rated current $I_m$, $i_0$ is replaced by the no-load $I_0$, and $\omega_1$ is replaced by the rated frequency $F_m$, and when at least one of these is not satisfied, it can be said that the electric motor specification set value 111, and the electric motor constant set value 112, which are set in the electrical power converter 101, are inappropriate.

Further, the determination can also be carried out by using the relationships of voltage, current and torque of the induction motor, which are shown in Expression 28 to Expression 32 based on the rotating coordinate system.

[MATH. 28]

$$v_d = R_1 i_d - \omega_1 L_s i_q$$

[MATH. 29]

$$v_q = R_1 i_q + \omega_1 \left( L_s + \frac{M^2}{L_2} \right) i_d$$

[MATH. 30]

$$v_1 = \sqrt{\frac{2}{3}\left(v_d{}^2 + v_q{}^2\right)}$$

[MATH. 31]

$$i_1 = \sqrt{\frac{2}{3}\left(i_d{}^2 + i_q{}^2\right)}$$

[MATH. 32]

$$t = P_p M\, i_d i_q$$

From Expressions 33 to 35, $v_1$ or $t$ is obtained. When at least one of Expression 36 and Expression 37 is not satisfied, it can be said that the electric motor specification set value 111, and the electric motor constant set value 112, which are set in the electrical power converter 101, are inappropriate. It should be noted that Expression 28 to Expression 32 describe converted relationships based on the absolute conversion, but converted relationships based on the relative conversion may also be used.

[MATH. 33]

$$\omega_1 = 2\pi F_m$$

[MATH. 34]

$$i_1 = \sqrt{3}I_m$$

[MATH. 35]

$$i_d = \sqrt{3}I_0$$

[MATH. 36]

$$K_a V_m \geqq \sqrt{\frac{3}{2}} v_1 \geqq K_b V_m$$

[MATH. 37]

$$K_a W_m \geqq \frac{2\pi N_m}{60} t \geqq K_b W_m$$

When the electric motor specification set value 111 and the electric motor constant set value 112, which are set in the electrical power converter 101, are inappropriate, the inappropriate data items are changed to values satisfying the relationships described above.

It should be noted that, in the relationships shown by Expression 13 to Expression 23, for example, exchange among $i_1$, $i_0$, and $i_2$, exchange among $\omega_1$, $\omega_s$ and $\omega_2$, exchange among $R_1$, $R_2$ and $R_s$, exchange among $l$, $l_1$, $l_2$, $L_1$, $L_2$, $L_s$ and M, or the like, may be performed.

EMBODIMENT 2

FIG. 4 shows an example of a configuration of embodiment 2.

An electrical power converter 401, which performs drive control of a three-phase AC permanent-magnet synchronous motor 402, includes a switching circuit 406, the current detector 107, a set value determining section 408, and an electric motor control section 409.

The switching circuit 406 converts a DC voltage output from a DC power supply 400 to an arbitrary three-phase AC voltage based on the voltage command 118, and applies the three-phase AC voltage to the three-phase AC permanent-magnet synchronous motor 402.

A position detector 403 detects the rotor position of the three-phase AC permanent-magnet synchronous motor 402. Since the position and speed are in a differential and integral calculus relationship, it may be configured such that the rotation speed is detected, and such that the position is calculated from the detected rotation speed. Further, it may be configured such that a position detector or a speed detector is attached to a load attached to the three-phase AC permanent-magnet synchronous motor 402, and such that the rotor position of the three-phase AC permanent-magnet synchronous motor 402 is calculated from the detected position or speed.

On the basis of at least two of data items on electric motor specification set values 411, or data items on electric motor constant set values 412, the set value determining section 408 determines whether or not a set value is appropriate. When determining that the set value is inappropriate, the set value determining section 408 changes the set value to a data item defined on the basis of at least one of the data items on the electric motor specification set values 411, or of the data items on the electric motor constant set values 412.

Here, the two data items are, for example, the following data items.

- A data item on rated output $W_m$ of the electric motor specification set values 411, and a data item on rated voltage $V_m$ of the electric motor specification set values 411.

- A data item on rated output $W_m$ of the electric motor specification set values 411, and a data item on phase resistance R of the electric motor constant set values 412.
- A data item on phase resistance R of the electric motor constant set values 412, and a data item on d axis inductance $L_d$ of the electric motor constant set values 412.

The electric motor control section 409 generates the voltage command 118 on the basis of at least one of the data items on the electric motor specification set values 411, or of the data items on the electric motor constant set values 412, or of data items on electric motor specification change values 414, or of data items on electric motor constant change values 415, and on the basis of the detection current 116 and a detection position 417. The calculation method of the voltage command 118 is, for example, a vector control method. It should be noted that the coordinate system of the detection current 116 may be converted from a three-phase fixed coordinate system to a two-phase fixed coordinate system or a rotating coordinate system rotating at an arbitrary speed.

Examples of the electric motor specification set values 411 in the three-phase AC permanent-magnet synchronous motor 402 include a data item on rated output $W_m$, a data item on rated voltage $V_m$, a data item on rated current $I_m$, a data item on rated frequency $F_m$, a data item on maximum frequency $F_{mmax}$, a data item on rated speed $N_m$, a data item on maximum rotation speed $N_{mmax}$, a data item on rated torque $T_m$, a data item on the number of poles P, a data item on the number of pole pairs $P_p$, or the like. Further, examples of the electric motor constant set values 412 in the three-phase AC permanent-magnet synchronous motor 402 include a data item on phase resistance R, a data item on line-to-line resistance $R_{line}$, a data item on d axis inductance $L_d$, a data item on q axis inductance $L_q$, a data item on line-to-line inductance $L_{line}$, a data item on induced voltage (back electromotive force, back electromotive voltage, or the like) E at rated rotation speed, a data item on induced voltage constant $K_e$, or the like. The electric motor specification set values 411, and the electric motor constant set values 412 may be set from the outside of the power converter 401, or may be set in advance in the inside of the power converter 401.

A method for determining whether or not the electric motor specification set value 411 and the electric motor constant set value 412 are appropriate will be described.

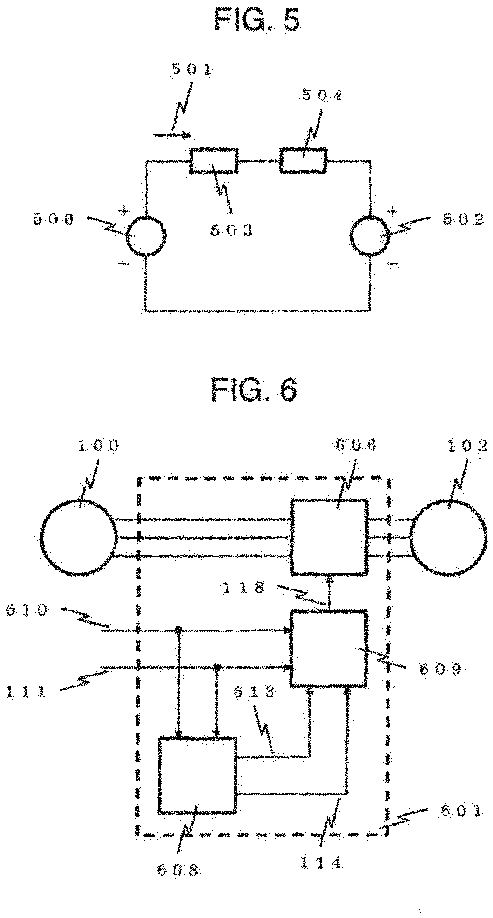

FIG. 5 is considered. FIG. 5 shows an example of an equivalent circuit of a permanent magnet synchronous motor, and shows one phase of the permanent magnet synchronous motor in a steady state.

In FIG. 5, when the angular velocity ω is used, a voltage 500 and a current 501 have a relationship shown in Expression 38.

[MATH. 38]

$$v = \sqrt{R^2 + (\omega L)^2}\, i + e$$

Therefore, when the voltage v500, the current i501, an induced voltage e502, an angular velocity ω, a resistance R503, and an inductance L504 are assumed to be positive, relationships of Expression 39 to Expression 41 are established.

[MATH. 39]

$$v > R\, i$$

[MATH. 40]

$$v > \omega L\, i$$

[MATH. 41]

$$v > e$$

Here, when the electric motor specification set values 411 and the electric motor constant set values 412 are used following the relationships shown in Expression 39 and Expression 41, Expression 42 to Expression 47 are obtained.

[MATH. 42]

$$K_a V_m \geqq R\ I_m \geqq K_b V_m$$

[MATH. 43]

$$K_a V_m \geqq 2\ \pi\ F_m L_d I_m \geqq K_b V_m$$

[MATH. 44]

$$K_a V_m \geqq 2\ \pi\ F_m L_q I_m \geqq K_b V_m$$

[MATH. 45]

$$K_a V_m \geqq 2\ \pi\ F_m L_{line} I_m \geqq K_b V_m$$

[MATH. 46]

$$K_a V_m \geqq E \geqq K_b V_m$$

[MATH. 47]

$$K_a V_m \geqq 2\ \pi\ F_m K_e \geqq K_b V_m$$

Further, the d axis inductance $L_d$ and the q axis inductance $L_q$ have a relationship shown in Expression 48.

[MATH. 48]

$$L_q \geqq L_d$$

Therefore, it can be said that, when at least one of relationships of Expression 42 to Expression 48 is not satisfied, the electric motor specification set values 411 and the electric motor constant set values 412, which are set in the electrical power converter 401, are inappropriate. It should be noted that Expression 42 to Expression 47 may be modified by using relationships of Expression 49 and Expression 50.

[MATH. 49]

$$R_{line} = 2\ R$$

[MATH. 50]

$$L_{line} = \frac{L_d + L_q}{2}$$

Further, the determination can be performed by using relationships of the voltage, current and torque of the permanent magnet synchronous motor in the rotating coordinate system, which are represented in Expression 30 and Expression 31, and Expression 51 to Expression 53.

[MATH. 51]

$$v_d = R\ i_d - \omega_1 L_q i_q$$

[MATH. 52]

$$v_q = R_1 i_q + \omega_1 \left( L_d i_d + K_e \right)$$

[MATH. 53]

$$t = P_p \left\{ \left( L_d - L_q \right) i_d + K_e \right\} i_q$$

It can be said that, when $v_1$ or t is obtained from Expression 33, Expression 34 and Expression 54, and when at least one of Expression 36 and Expression 37 is not satisfied, the electric motor specification set values 411 and the electric motor constant set values 412, which are set in the electrical power converter 401, are inappropriate. It should be noted that Expression 51 to Expression 53 describe converted relationships based on the absolute conversion, but converted relationships based on the relative conversion may also be used.

[MATH. 54]

$$i_d = 0$$

When the electric motor specification set values 411 and the electric motor constant set values 412, which are set in the electrical power converter 401, are inappropriate, inappropriate data items are changed to values satisfying the relationships described above.

EMBODIMENT 3

FIG. 6 shows an example of a configuration of embodiment 3.
An electrical power converter 601, which performs drive control of the three-phase AC induction motor 102, includes a switching circuit 606, a set value determining section 608, and an electric motor control section 609.
The switching circuit 606 converts a three-phase AC voltage from the three-phase AC power supply 100 to an arbitrary three phase AC voltage basis on the voltage command 118, and applies the three-phase AC voltage to the three-phase AC induction motor 102.
On the basis of at least two of electrical power converter specification set values 610, or of the data items on the electric motor specification set values 111, the set value determining section 608 determines whether or not a set value is appropriate. When determining that the set value is inappropriate, the set value determining section 608 changes the set value to a data item defined on the basis of at least one of the data items on the electrical power converter specification set values 610 or of the data items on the electric motor specification set values 611.
Here, the two data items are, for example, the following data items.

- A data item on rated output capacity $VA_c$ of the electrical power converter specification set values 610, and a data item on application electric motor rated output $W_C$ of the electrical power converter specification set values 610.
- A data item on rated output capacity $VA_c$ of the electrical power converter specification set values 610, and a data item on rated output $W_m$ of the electric motor specification set values 111.
- A data item on rated output $W_m$ of the electric motor specification set values 111, and a data item on rated voltage $V_m$ of the electric motor specification set values 111.

The electric motor control section 609 generates the voltage command 118 on the basis of at least one of the data items on the electrical power converter specification set values 610, or of the data items on the electric motor specification set values 111, of data items on electrical power converter specification change values 613, or of the data items on the electrical motor specification change values 114. The calculation method of the voltage command 118 is, for example, a V/f control method.
Examples of the electrical power converter specification set values 610 include the data item on rated output capacity $VA_c$, the data item on application electric motor output Wc, a data item on rated output voltage $V_c$, a data item on rated output current $I_c$, a data item on maximum output frequency $F_{cmax}$, or the like. The electrical power converter specification set values 610 may be set from the outside of the electrical power converter 601, or may be set in advance in the inside of the electrical power converter 601.

A method for determining whether or not the electrical power converter specification set values 610 or the electric motor specification set values 111 are appropriate will be described.

In order to maximize the specifications of the electric motor, the specification of the electrical power converter needs to be higher than at least the specification of the electric motor. For example, relationships of Expression 55 to Expression 73 need to be satisfied.

[MATH. 55]

$$K_a V A_c \geqq W_m \geqq K_b V A_c$$

[MATH. 56]

$$K_a W_c \geqq W_m \geqq K_b W_c$$

[MATH. 57]

$$K_a V_c \geqq V_m \geqq K_b V_c$$

[MATH. 58]

$$K_a I_c \geqq I_m \geqq K_b I_c$$

[MATH. 59]

$$K_a F_{cmax} \geqq F_m \geqq K_b F_{cmax}$$

[MATH. 60]

$$K_a F_{cmax} \geqq F_{mmax} \geqq K_b F_{cmax}$$

[MATH. 61]

$$K_a F_{mmax} \geqq F_m \geqq K_b F_{mmax}$$

[MATH. 62]

$$K_a F_c \geqq F_s \geqq K_b F_c$$

[MATH. 63]

$$K_a F_m \geqq F_s \geqq K_b F_m$$

[MATH. 64]

$$K_a F_{mmax} \geqq F_s \geqq K_b F_{mmax}$$

[MATH. 65]

$$K_a V A_c \geqq \sqrt{3} V_m I_m \geqq K_b V A_c$$

[MATH. 66]

$$K_a W_c \geqq \sqrt{3} V_m I_m \geqq K_b W_c$$

[MATH. 67]

$$K_a W_m \geqq \sqrt{3} V_m I_m \geqq K_b W_m$$

[MATH. 68]

$$K_a \frac{P_p V A_c}{2 \pi F_c} \geqq T_m \geqq K_b \frac{P_p V A_c}{2 \pi F_c}$$

[MATH. 69]

$$K_a \frac{P_p W_c}{2 \pi F_c} \geqq T_m \geqq K_b \frac{P_p W_c}{2 \pi F_c}$$

[MATH. 70]

$$K_a \frac{P_p W_m}{2 \pi F_c} \geqq T_m \geqq K_b \frac{P_p W_m}{2 \pi F_c}$$

[MATH. 71]

$$K_a V A_c \geqq \frac{2 \pi T_m F_m}{P_p} \geqq K_b V A_c$$

[MATH. 72]

$$K_a W_c \geqq \frac{2 \pi T_m F_m}{P_p} \geqq K_b W_c$$

[MATH. 73]

$$K_a W_m \geqq \frac{2 \pi T_m F_m}{P_p} \geqq K_b W_m$$

Therefore, it can be said that, when at least one of relationships of Expression 55 to Expression 73 is not satisfied, the electrical power converter specification set values 610 or the electric motor specification set values 111, which are set in the electrical power converter 601, are inappropriate. Further, Expression 55 to Expression 73 may be modified by using relationships of Expression 74 to Expression 76.

[MATH. 74]

$$P_p = \frac{P}{2}$$

[MATH. 75]

$$F_m = \frac{P_p N_m}{60}$$

[MATH. 76]

$$F_{mmax} = \frac{P_p N_{mmax}}{60}$$

When the electrical power converter specification set value 610 and the electric motor specification set value 111, which are set in the electrical power converter 601, are inappropriate, inappropriate data items are changed to values satisfying the relationships described above.

EMBODIMENT 4

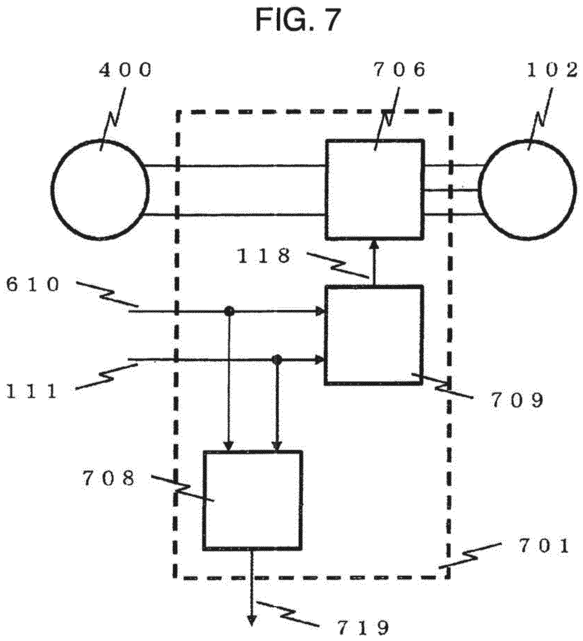

FIG. 7 shows an example of a configuration of embodiment 4.

An electrical power converter 701, which performs drive control of the three-phase AC induction motor 102, includes a switching circuit 706, a set value determining section 708, and an electric motor control section 709.

The switching circuit 706 converts a DC voltage output from the DC power supply 400 to a three-phase AC voltage based on the voltage command 118, and applies the three-phase AC voltage to the three-phase AC induction motor 102.

On the basis of at least two of the data items on the electrical power converter specification set values 610, or the data items on the electrical motor specification set values 111, the set value determining section 708 determines whether or not a set value is appropriate. When determining that the set value is inappropriate, the set value determining section 708 outputs an alarm signal 719. The method for determining whether or not the set value is appropriate is as described above.

The electric motor control section 709 generates the voltage command 118 on the basis of one of the data items on the electrical power converter specification set values 610 or the data items on the electric motor specification set values 111. The calculation method of the voltage command 118 is, for example, a V/f control method.

It should be noted that the present invention is described in conjunction with a three-phase AC induction motor and a three-phase AC permanent-magnet synchronous motor, but can be generally applicable to other electric motors, such as a three-phase electric motors, a single-phase electric motor, and a direct current electric motor.

Further, each of the expressions represents the case of an electric motor in star connection, but delta connection can be equivalently converted to the star connection. The present invention is described on the basis of the T-type equivalent circuit, but, for example, the T-type equivalent circuit can be equivalently converted to other equivalent circuits such as a L-type equivalent circuit. Phase and line-to-line voltages can be converted to each other. The case of a three-phase electric motor is considered, but the case of a single-phase electric motor may be considered by respectively converting the expressions to expressions for the single-phase electric motor. In the description of the present invention, losses such as iron loss and mechanical loss are ignored but may be considered. The frequency, the angular velocity, and the rotation speed can be converted by using the number of poles or the number of pole pairs. These descriptions are omitted.

There is an electrical power converter provided with so-called auto tuning which measures electric motor constants of an electric motor driven by the electrical power converter. The present invention can be applied to the measured values of electric motor constants measured by the auto tuning.

The present invention is not limited to the above-described embodiments and includes various modifications. For example, the embodiments described above have been described in detail to better illustrate the present invention and are not intended to be necessarily limited to include all the configurations described above. Further, a part of one of the embodiments described above can be replaced by a part of the configuration of the other embodiment, and also one of the embodiments described above can be additionally provided with a part of the configuration of the other embodiment. Further, for some of the configuration of each of the embodiments, the addition, deletion, and substitution of the configuration of the other embodiment are possible.

Further, a part or all of the respective configurations, functions, processing sections, processing means, and the like, described above may be realized by hardware designed, for example, by an integrated circuit. Further, each of the compositions, functions, and the like, described above may be realized by software in such a manner that a processor interprets and executes a program for realizing each of the functions. Information, including a program, a table, a file and the like for realizing each of the functions, may be stored in a recording apparatus, such as a memory, a hard disk, and SSD (Solid State Drive), or a recording medium, such as an IC card, an SD card, and a DVD.

Further, control lines and information lines, which are considered to be necessary for explanation, are shown, and hence, all control lines and information lines, which are needed to configure a product, are not necessarily shown. In practice, it may be considered that almost all of the configurations are connected to each other.

REFERENCE SIGNS LIST

| | |
|---|---|
| 100 | Three phase AC power supply |
| 101 | Electrical power converter |
| 102 | Three-phase AC induction motor |
| 104 | Rectifying circuit |
| 105 | Smoothing circuit |
| 106 | Switching circuit |
| 107 | Current detector |
| 108 | Set value determining section |
| 109 | Electric motor control section |
| 111 | Electric motor specification set value |
| 112 | Electric motor constant set value |
| 114 | Electric motor specification change value |
| 115 | Electric motor constant change value |
| 116 | Detection current |
| 118 | Voltage command |
| 200 | Voltage v |
| 201 | Current i |
| 202 | Resistance R |
| 203 | Inductance L |
| 300 | Primary voltage $v_1$ |
| 301 | Primary current $i_1$ |
| 302 | No load current $i_0$ |
| 303 | Secondary current $i_2$ |
| 304 | Primary resistance $R_1$ |
| 305 | Primary leakage inductance $l_1$ |
| 306 | Mutual inductance M |
| 307 | Secondary leakage inductance $l_2$ |
| 308 | Load $R_L$ |
| 400 | DC power supply |
| 401 | Electrical power converter |
| 402 | Three-phase AC permanent-magnet synchronous motor |
| 403 | Rotor position detector |
| 406 | Switching circuit |
| 408 | Set value determining section |
| 409 | Electric motor control section |
| 411 | Electric motor specification set value |
| 412 | Electric motor constant set value |
| 414 | Electric motor specification change value |
| 415 | Electric motor constant change value |
| 417 | Detection position |
| 500 | Voltage v |
| 501 | Current i |
| 502 | Induced voltage e |
| 503 | Resistance R |

504     Inductance L
601     Electrical power converter
606     Switching circuit
608     Set value determining section
609     Electric motor control section
610     Electrical power converter specification set value
613     Electrical power converter specification change value
701     Electrical power converter
706     Switching circuit
708     Set value determining section
709     Electric motor control section
719     Alarm signal

**Claims**

1. An electrical power converter configured to perform drive control of an electric motor by using at least one of data items on electric motor specification set values (111) or of data items on electrical motor constant set values (112), the electrical power converter comprising

   a set value determining section (108) configured to determine whether or not at least one of the data items of the data items on the electric motor specification set values (111) or of the data items on the electric motor constant set values (112) is appropriate,
   the set value determining section (108) is configured to perform the determination on the basis of at least two of the data items of the data items on the electric motor specification set values (111) or of the data items on the electric motor constant set values (112),
   wherein the set value determining section (108) determines that a data item is appropriate if the data item is between a maximum value and a minimum value and that a data item is inappropriate if the data item is not between a maximum value and a minimum value, the maximum value or the minimum value being set on the basis of at least one of the data items of the data items on the electric motor specification set values (111) or of the data items on the electric motor constant set values (112),
   wherein, when it is determined by the set value determining section (108) that a data item is inappropriate, the inappropriate data item is changed to a data item which is set on the basis of at least one of the data items on the electric motor specification set values (111) or of the data items on the electric motor constant set values (112),
   wherein the drive control of the electric motor (102) is configured to be performed by using at least one of the data items of the data items on the electric motor specification set values (111), of the data items on the electric motor constant set value (112), of the data items of the data items on changed electric motor specification set values (114), or of the data items on changed electric motor constant set values (115),
   wherein the electric motor specification set values (111) include a data item on rated output (Wm), a data item on rated voltage (Vm), a data item on rated current (Im), a data item on rated frequency (Fm), a data item on maximum frequency (Fmmax), a data item on rated rotation speed (Nm), a data item on maximum rotation speed (Nmmax), a data item on rated torque (Tm), a data item on the number of poles (P), a data item on the number of pole pairs (Pp), a data item on rated slide (Fs), or the like, and
   wherein the electric motor constant set values (112) include a data item on primary resistance (R1), a data item on secondary resistance (R2), a data item on primary leakage inductance (l1), a data item on secondary leakage inductance (l2), a data item on primary self-inductance (L1), a data item on secondary self-inductance (L2), a data item on mutual inductance (M), a data item on no-load magnetization current (I0), or the like.

2. The electrical power converter according to claim 1, wherein
   the maximum value or the minimum value are set on the basis of an electric motor rated voltage set value.

3. The electrical power converter according to claim 2, wherein
   the maximum value or the minimum value defined by multiplying a predetermined coefficient to the electric motor rated voltage set value.

4. The electrical power converter according to claim 1, wherein
   the minimum value is set on the basis of resolution of software processing.

5. The electrical power converter according to claim 1, wherein

the set value determining section (108) determining that at least one of the data items on the electric motor constant set values (112) is appropriate is determined by comparing a d-axis inductance and a q-axis inductance.

6. The electrical power converter according to claim 1, wherein
the set value determining section (108) determining that at least one of the data items on the electric motor constant set values (112) is appropriate is determined if an electric motor rated torque satisfies a maximum value or a minimum value set in advance.

7. The electrical power converter according to claim 1, wherein
the maximum value or the minimum value are set on the basis of at least one of data items on electrical power converter set values.

8. The electrical power converter according to claim 1, wherein
an alarm is output when at least one of the data items on the electric motor constant set values (112) is not between the maximum value and the minimum value which are set on the basis of at least one of the data items on the electric motor specification set values (111).

9. The electrical power converter according to claim 1, wherein
the set value determining section (108) determining that at least one of the data items on the electric motor constant set values (112) is appropriate is determined if at least one of data items on electrical power converter specification set values, or of the data items on the electric motor specification set values (111), or of the data items on the electric motor constant set values (112) is between the maximum value and the minimum value set on the basis of the electric motor specification set values (111).

10. The electrical power converter according to claim 1,
wherein the set value determining section (108) performing the determination on the basis of at least two of the data items on the electrical power converter specification set values, or of the data items on the electric motor specification set values (111), or of the data items on the electric motor constant set values (112).

11. The electrical power converter according to claim 10, wherein
the set value determining section (108) determines that a data item is appropriate if the data item is between a maximum value and a minimum value set on the basis of at least one of the data items on the electrical power converter specification set values, or of the data items on the electric motor specification set values (111), or of the data items on the electric motor constant set values (112).

12. The electrical power converter according to claim 11, wherein
the minimum value, used for determining if the data item is appropriate, is set on the basis of resolution of software processing.

13. The electrical power converter according to claim 10, wherein

when it is determined by the set value determining section (108) that the data item is inappropriate, the inappropriate data item is changed to a data item which is set on the basis of at least one of the data items on the electrical power converter specification set values, or of the data items on the electric motor specification set values (111), or of the data items on the electric motor constant set values (112), and
the drive control of the electric motor is performed by using at least one of the data items on the electrical power converter specification set values, or of the data items on the electric motor specification set values (111), or of the data items on the electric motor constant set value (112), or of the data items on electrical power converter specification change value, or of the data items on the electric motor specification change value, or of the data items on electric motor constant change value (115).

14. The electrical power converter according to claim 10, wherein
an alarm signal is output when it is determined by the set value determining section (108) that the data item is inappropriate.

**Patentansprüche**

1. Elektrischer Leistungswandler, der dazu ausgelegt ist, unter Anwendung von zumindest einem aus Datenelementen über Elektromotorspezifikationssollwerte (111) oder Datenelementen über Elektromotorkonstantensollwerte (112) eine Antriebssteuerung eines Elektromotors durchzuführen, wobei der elektrische Leistungswandler Folgendes umfasst:

   einen Sollwert-Bestimmungsabschnitt (108), der dazu ausgelegt ist, zu bestimmen, ob zumindest eines aus den Datenelementen der Datenelemente über die Elektromotorspezifikationssollwerte (111) oder den Datenelementen über die Elektromotorkonstantensollwerte (112) geeignet ist,
   wobei der Sollwert-Bestimmungsabschnitt (108) dazu ausgelegt ist, die Bestimmung beruhend auf zumindest zwei der Datenelemente aus den Datenelementen über die Elektromotorspezifikationssollwerte (111) oder den Datenelementen über die Elektromotorkonstantensollwerte (112) durchzuführen,
   wobei der Sollwert-Bestimmungsabschnitt (108) bestimmt, dass ein Datenelement geeignet ist, wenn das Datenelement zwischen einem Höchstwert und einem Mindestwert liegt, und dass ein Datenelement ungeeignet ist, wenn das Datenelement nicht zwischen einem Höchstwert und einem Mindestwert liegt, wobei der Höchstwert oder der Mindestwert beruhend auf zumindest einem aus den Datenelementen der Datenelemente über die Elektromotorspezifikationssollwerte (111) oder den Datenelementen über die Elektromotorkonstantensollwerte (112) eingestellt ist,
   wobei, wenn von dem Sollwert-Bestimmungsabschnitt (108) bestimmt wird, dass ein Datenelement ungeeignet ist, das ungeeignete Datenelement auf ein Datenelement geändert wird, das beruhend auf zumindest einem aus den Datenelementen über die Elektromotorspezifikationssollwerte (111) oder den Datenelementen über die Elektromotorkonstantensollwerte (112) eingestellt ist,
   wobei die Antriebssteuerung des Elektromotors (102) dazu ausgelegt ist, unter Verwendung von zumindest einem aus den Datenelementen über die Elektromotorspezifikationssollwerte (111), den Datenelementen über die Elektromotorkonstantensollwerte (112), den Datenelementen der Datenelemente über geänderte Elektromotorspezifikationssollwerte (114) oder den Datenelementen über geänderte Elektromotorkonstantensollwerte (115) durchgeführt zu werden,
   wobei die Elektromotorspezifikationssollwerte (111) ein Datenelement über eine Nennausgangsleistung (Wm), ein Datenelement über eine Nennspannung (Vm), ein Datenelement über einen Nennstrom (Im), ein Datenelement über eine Nennfrequenz (Fm), ein Datenelement über eine Höchstfrequenz (Fmmax), ein Datenelement über eine Nenndrehgeschwindigkeit (Nm), ein Datenelement über eine Höchstdrehgeschwindigkeit (Nmmax), ein Datenelement über ein Nenndrehmoment (Tm), ein Datenelement über die Anzahl von Polen (P), ein Datenelement über die Anzahl von Polpaaren (Pp), ein Datenelement über ein Nennrutschen (Fs) oder dergleichen umfassen, und
   wobei die Elektromotorkonstantensollwerte (112) ein Datenelement über einen Primärwiderstand (R1), ein Datenelement über einen Sekundärwiderstand (R2), ein Datenelement über Primärstreuinduktivität (11), ein Datenelement über Sekundärstreuinduktivität (12), ein Datenelement über Primäreigeninduktivität (L1), ein Datenelement über Sekundäreigeninduktivität (L2), ein Datenelement über Gegeninduktivität (M), ein Datenelement über Nulllast-Magnetisierungsstrom (10) oder dergleichen umfassen.

2. Elektrischer Leistungswandler nach Anspruch 1, wobei
   der Höchstwert oder der Mindestwert beruhend auf einem Elektromotornennspannungssollwert eingestellt ist.

3. Elektrischer Leistungswandler nach Anspruch 2, wobei
   der Höchstwert oder der Mindestwert durch Multiplizieren eines vorbestimmten Koeffizienten mit dem Elektromotornennspannungssollwert definiert ist.

4. Elektrischer Leistungswandler nach Anspruch 1, wobei
   der Mindestwert beruhend auf der Auflösung von Softwareverarbeitung eingestellt ist.

5. Elektrischer Leistungswandler nach Anspruch 1, wobei
   das Bestimmen, dass zumindest eines aus den Datenelementen über die Elektromotorkonstantensollwerte (112) geeignet ist, durch den Sollwert-Bestimmungsabschnitt (108) mittels Vergleichens einer d-Achsen-Induktivität und einer q-Achsen-Induktivität bestimmt wird.

6. Elektrischer Leistungswandler nach Anspruch 1, wobei
   das Bestimmen, dass zumindest eines aus den Datenelementen über die Elektromotorkonstantensollwerte (112) geeignet ist, durch den Sollwert-Bestimmungsabschnitt (108) bestimmt wird, wenn eine Elektromotor-Nenndrehzahl einem vorab eingestellten Höchstwert oder Mindestwert entspricht.

**7.** Elektrischer Leistungswandler nach Anspruch 1, wobei
der Höchstwert oder der Mindestwert beruhend auf zumindest einem aus Datenelementen über Elektrischer-Leistungswandler-Sollwerte eingestellt ist.

**8.** Elektrischer Leistungswandler nach Anspruch 1, wobei
ein Alarm ausgegeben wird, wenn zumindest eines der Datenelemente über die Elektromotorkonstantensollwerte (112) nicht zwischen dem Höchstwert und dem Mindestwert, die beruhend auf zumindest einem der Datenelemente über die Elektromotorspezifikationssollwerte (111) eingestellt sind, liegt.

**9.** Elektrischer Leistungswandler nach Anspruch 1, wobei
das Bestimmen, dass zumindest eines aus den Datenelementen über die Elektromotorkonstantensollwerte (112) geeignet ist, durch den Sollwert-Bestimmungsabschnitt (108) bestimmt wird, wenn zumindest eines aus den Datenelementen über Elektrischer-Leistungswandler-Spezifikationssollwerte oder den Datenelementen über die Elektromotorspezifikationssollwerte (111) oder den Datenelementen über die Elektromotorkonstantensollwerte (112) zwischen dem Höchstwert und dem Mindestwert, die beruhend auf den Elektromotorspezifikationssollwerten (111) eingestellt sind, liegt.

**10.** Elektrischer Leistungswandler nach Anspruch 1, wobei
der Sollwert-Bestimmungsabschnitt (108) die Bestimmung beruhend auf zumindest zwei aus den Datenelementen über die Elektrischer-Leistungswandler-Spezifikationssollwerte oder den Datenelementen über die Elektromotorspezifikationssollwerte (111) oder den Datenelementen über die Elektromotorkonstantensollwerte (112) durchführt.

**11.** Elektrischer Leistungswandler nach Anspruch 10, wobei
der Sollwert-Bestimmungsabschnitt (108) bestimmt, dass ein Datenelement geeignet ist, wenn das Datenelement zwischen einem Höchstwert und einem Mindestwert, die beruhend auf zumindest einem aus den Datenelementen über die Elektrischer-Leistungswandler-Spezifikationssollwerte oder den Datenelementen über die Elektromotorspezifikationssollwerte (111) oder den Datenelementen über die Elektromotorkonstantensollwerte (112) eingestellt sind, liegt.

**12.** Elektrischer Leistungswandler nach Anspruch 11, wobei
der Mindestwert, der verwendet wird, um zu bestimmen, ob das Datenelement geeignet ist, beruhend auf der Auflösung von Softwareverarbeitung eingestellt ist.

**13.** Elektrischer Leistungswandler nach Anspruch 10, wobei

wenn durch den Sollwert-Bestimmungsabschnitt (108) bestimmt wird, dass ein Datenelement ungeeignet ist, das ungeeignete Datenelement auf ein Datenelement geändert wird, das beruhend auf zumindest einem aus den Datenelementen über die Elektrischer-Leistungswandler-Spezifikationssollwerte, den Datenelementen über die Elektromotorspezifikationssollwerte (111) oder den Datenelementen über die Elektromotorkonstantensollwerte (112) eingestellt ist, und
die Antriebssteuerung des Elektromotors unter Verwendung von zumindest einem aus den Datenelementen über die Elektrischer-Leistungswandler-Spezifikationssollwerte, den Datenelementen über die Elektromotorspezifikationssollwerte (111), den Datenelementen über die Elektromotorkonstantensollwerte (112), den Datenelementen über den geänderten Elektromotorspezifikationssollwert oder den Datenelementen über den geänderten Elektromotorkonstantensollwert (115) durchgeführt wird.

**14.** Elektrischer Leistungswandler nach Anspruch 10, wobei
ein Alarmsignal ausgegeben wird, wenn durch den Sollwert-Bestimmungsabschnitt (108) bestimmt wird, dass das Datenelement ungeeignet ist.

**Revendications**

**1.** Convertisseur de puissance électrique configuré pour effectuer une commande d'entraînement d'un moteur électrique en utilisant au moins un certain d'éléments de données sur des valeurs de consigne de spécification de moteur électrique (111) ou d'éléments de données sur des valeurs de consigne de constante de moteur électrique (112), le convertisseur de puissance électrique comprenant

une section de détermination de valeur de consigne (108) configurée pour déterminer si au moins l'un des éléments de données des éléments de données sur les valeurs de consigne de spécification de moteur électrique (111) ou des éléments de données sur les valeurs de consigne de constante de moteur électrique (112) est approprié ou non,

la section de détermination de valeur de consigne (108) est configurée pour effectuer la détermination sur la base d'au moins deux des éléments de données des éléments de données sur les valeurs de consigne de spécification de moteur électrique (111) ou des éléments de données sur les valeurs de consigne de constante de moteur électrique (112),

dans lequel la section de détermination de valeur de consigne (108) détermine qu'un élément de données est approprié si l'élément de données est compris entre une valeur maximale et une valeur minimale et qu'un élément de données est inapproprié si l'élément de données n'est pas compris entre une valeur maximale et une valeur minimale, la valeur maximale ou la valeur minimale étant définie sur la base d'au moins l'un des éléments de données des éléments de données sur les valeurs de consigne de spécification de moteur électrique (111) ou des éléments de données sur les valeurs de consigne de constante de moteur électrique (112),

dans lequel lorsqu'il est déterminé par l'intermédiaire de la section de détermination de valeur de consigne (108) qu'un élément de données est inapproprié, l'élément de données inapproprié est modifié en un élément de données qui est défini sur la base d'au moins l'un des éléments de données sur les valeurs de consigne de spécification de moteur électrique (111) ou des éléments de données sur les valeurs de consigne de constante de moteur électrique (112),

dans lequel la commande d'entraînement du moteur électrique (102) est configurée pour être effectuée en utilisant au moins l'un des éléments de données des éléments de données sur les valeurs de consigne de spécification de moteur électrique (111), des éléments de données sur la valeur de consigne de constante de moteur électrique (112), des éléments de données des éléments de données sur les valeurs de consigne de spécification de moteur électrique modifiées (114), ou des éléments de données sur les valeurs de consigne de constante de moteur électrique modifiées (115),

dans lequel les valeurs de consigne de spécification de moteur électrique (111) comprennent un élément de donnée sur la sortie nominale (Wm), un élément de donnée sur la tension nominale (Vm), un élément de donnée sur le courant nominal (Im), un élément de donnée sur la fréquence nominale (Fm), un élément de donnée sur la fréquence maximale (Fmmax), un élément de donnée sur la vitesse de rotation nominale (Nm), une donnée sur la vitesse de rotation maximale (Nmmax), un élément de donnée sur le couple nominal (Tm), un élément de donnée sur le nombre de pôles (P), un élément de donnée sur le nombre de paires de pôles (Pp), un élément de donnée sur le glissement nominal (Fs), ou analogue, et

dans lequel les valeurs de consigne de constante de moteur électrique (112) comprennent un élément de données sur la résistance primaire (R1), un élément de données sur la résistance secondaire (R2), un élément de données sur l'inductance de fuite primaire (11), un élément de données sur l'inductance de fuite secondaire (12), un élément de données sur l'auto-inductance primaire (L1), un élément de données sur l'auto-inductance secondaire (L2), un élément de données sur l'inductance mutuelle (M), un élément de données sur le courant de magnétisation à vide (10), ou analogue.

2. Convertisseur de puissance électrique selon la revendication 1, dans lequel
la valeur maximale ou la valeur minimale sont définies sur la base d'une valeur de consigne de tension nominale de moteur électrique.

3. Convertisseur de puissance électrique selon la revendication 2, dans lequel
la valeur maximale ou la valeur minimale est définie en multipliant un coefficient prédéterminé par la valeur de consigne de tension nominale de moteur électrique.

4. Convertisseur de puissance électrique selon la revendication 1, dans lequel
la valeur minimale est définie sur la base d'une résolution de traitement logiciel.

5. Convertisseur de puissance électrique selon la revendication 1, dans lequel
la section de détermination de valeur de consigne (108), déterminant qu'au moins un des éléments de données sur les valeurs de consigne constantes de moteur électrique (112) est approprié, est déterminée en comparant une inductance d'axe d et une inductance d'axe q.

**6.** Convertisseur de puissance électrique selon la revendication 1, dans lequel
la section de détermination de valeur de consigne (108), déterminant qu'au moins l'un des éléments de données sur les valeurs de consigne de constante de moteur électrique (112) est approprié, est déterminée si un couple nominal de moteur électrique satisfait une valeur maximale ou une valeur minimale définie à l'avance.

**7.** Convertisseur de puissance électrique selon la revendication 1, dans lequel
la valeur maximale ou la valeur minimale sont définies sur la base d'au moins un d'éléments de données sur les valeurs de consigne de convertisseur de puissance électrique.

**8.** Convertisseur de puissance électrique selon la revendication 1, dans lequel
une alarme est délivrée en sortie lorsqu'au moins un des éléments de données sur les valeurs de consigne de constante de moteur électrique (112) n'est pas entre la valeur maximale et la valeur minimale qui sont définies sur la base d'au moins un des éléments de données sur les valeurs de consigne de spécification de moteur électrique (111).

**9.** Convertisseur de puissance électrique selon la revendication 1, dans lequel
la section de détermination de valeur de consigne (108), déterminant qu'au moins l'un des éléments de données sur les valeurs de consigne de constante de moteur électrique (112) est approprié, est déterminée si au moins l'un des éléments de données sur les valeurs de consigne de spécification de convertisseur de puissance électrique, ou des éléments de données sur les valeurs de consigne de spécification de moteur électrique (111), ou des éléments de données sur les valeurs de consigne de constante de moteur électrique (112), est entre la valeur maximale et la valeur minimale définies sur la base des valeurs de consigne de spécification de moteur électrique (111).

**10.** Convertisseur de puissance électrique selon la revendication 1, dans lequel
la section de détermination de valeur de consigne (108) effectue la détermination sur la base d'au moins deux des éléments de données sur les valeurs de consigne de spécification de convertisseur de puissance électrique, ou des éléments de données sur les valeurs de consigne de spécification de moteur électrique (111), ou des éléments de données sur les valeurs de consigne de constante de moteur électrique (112).

**11.** Convertisseur de puissance électrique selon la revendication 10, dans lequel
la section de détermination de valeur de consigne (108) détermine qu'un élément de données est approprié si l'élément de données est entre une valeur maximale et une valeur minimale définie sur la base d'au moins un des éléments de données sur les valeurs de consigne de spécification de convertisseur de puissance électrique, ou des éléments de données sur les valeurs de consigne de spécification de moteur électrique (111), ou des éléments de données sur les valeurs de consigne de constante de moteur électrique (112).

**12.** Convertisseur de puissance électrique selon la revendication 11, dans lequel
la valeur minimale, utilisée pour déterminer si l'élément de données est approprié, est définie sur la base d'une résolution de traitement logiciel.

**13.** Convertisseur de puissance électrique selon la revendication 10, dans lequel

lorsqu'il est déterminé par la section de détermination de valeur de consigne (108) que l'élément de données est inapproprié, l'élément de données inapproprié est modifié en un élément de données qui est défini sur la base d'au moins l'un des éléments de données sur les valeurs de consigne de spécification de convertisseur de puissance électrique, ou des éléments de données sur les valeurs de consigne de spécification de moteur électrique (111), ou des éléments de données sur les valeurs de consigne de constante de moteur électrique (112), et
la commande d'entraînement du moteur électrique est effectuée en utilisant au moins l'un des éléments de données sur les valeurs de consigne de spécification de convertisseur de puissance électrique, ou des éléments de données sur les valeurs de consigne de spécification de moteur électrique (111), ou des éléments de données sur la valeur de consigne de constante de moteur électrique (112), ou des éléments de données sur la valeur de modification de spécification de convertisseur de puissance électrique, ou des éléments de données sur la valeur de modification de spécification de moteur électrique, ou des éléments de données sur la valeur de modification de constante de moteur électrique (115).

**14.** Convertisseur de puissance électrique selon la revendication 10, dans lequel
un signal d'alarme est délivré en sortie lorsqu'il est déterminé par la section de détermination de valeur de consigne (108) que l'élément de données est inapproprié.

# FIG. 1

# FIG. 2

# FIG. 3

# FIG. 4

## FIG. 5

## FIG. 6

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3128833 B
- US 5929400 A
- EP 1257049 A2
- JP H04281392 A